# EUROPEAN PATENT SPECIFICATION

(11) **EP 3 223 143 B1**
(45) Date of publication and mention of the grant of the patent: **04.11.2020**
(21) Application number: 17162298.8
(22) Date of filing: 22.03.2017
(51) Int. Cl.: G06F 3/12, H04N 1/00, H04N 1/32

(54) **INFORMATION PROCESSING APPARATUS, CONTROL METHOD, AND STORAGE MEDIUM**
VORRICHTUNG ZUR INFORMATIONSVERARBEITUNG, STEUERUNGSVERFAHREN UND SPEICHERMEDIUM
APPAREIL DE TRAITEMENT D'INFORMATIONS, PROCÉDÉ DE COMMANDE ET SUPPORT D'INFORMATIONS

(30) Priority: 23.03.2016 JP 2016058858
(43) Date of publication of application: 27.09.2017
(73) Proprietor: Canon Kabushiki Kaisha, Tokyo 146-8501 (JP)
(72) Inventor: NAKAGAWA, Masashi, Ohta-ku, Tokyo 146-8501 (JP)
(74) Representative: Canon Europe Limited

(56) References cited:
- EP-A2- 1 840 729
- US-A1- 2010 259 787
- US-A1- 2014 233 050
- US-A1- 2015 248 263

## Description

### BACKGROUND OF THE INVENTION

### Field of the Invention

The present invention relates to a technique for installing a printer driver.

### Description of the Related Art

Japanese Patent Application Laid-Open No. 2002-366502 discusses a technique that is for installing a printer driver when a search for a network printer located in the same segment is executed and if a new network printer is found.

EP1840729 discloses a technique of specifying a search key as a condition when a search through a printer database is executed.

US2015/248263 describes a print server sending a request for information to each printer in the system; after receiving information from a printer, the print server adds the printer to a listing of available printers.

### SUMMARY OF THE INVENTION

According to a first aspect of the present invention, there is provided an information processing apparatus as specified in claims 1 to 6. According to a second aspect of the present invention, there is provided a control method as specified in claims 7 to 12. According to a third aspect of the present invention, there is provided a program as specified in claim 13. According to a fourth aspect of the present invention, there is provided a storage medium as specified in claim 14.

Further features of the present invention will become apparent from the following description of embodiments with reference to the attached drawings.

### BRIEF DESCRIPTION OF THE DRAWINGS

Fig. 1 is a diagram illustrating a configuration in which clients, servers, and printers are connected to a network.
Fig. 2 is a block diagram illustrating hardware and software of a computer system.
Fig. 3 is a block diagram illustrating an installer module.
Fig. 4 is a flowchart illustrating WSD printer search processing.
Fig. 5 a diagram illustrating a printer search screen of the installer module.
Fig. 6 is a flowchart illustrating WSD printer installation processing.
Fig. 7 is a flowchart illustrating WSD printer installation processing.
Fig. 8 is a diagram illustrating an example of a screen that displays a message asking a user whether to delete an existing printer queue.
Fig. 9 is a flowchart illustrating WSD printer installation processing.
Fig. 10 is a diagram illustrating an example of a screen requesting a user to confirm whether to install a V4 driver.
Fig. 11 is a flowchart illustrating WSD printer installation processing.

### DESCRIPTION OF THE EMBODIMENTS

Depending on the specifications of an operating system, when a search for a printer is performed, printers of already installed printer drivers may be excluded from a search result obtained thereby. This may lead to such an issue that a user cannot select a printer, for which the user desires to install a printer driver, from the search result. For example, assume that the user attempts to install a printer driver for a printer, and the type of this printer driver is different from the type of a printer driver already installed for this printer. In this case, the user cannot select the printer from a search result, because the printer is excluded from the search result.

In contrast, according to an embodiment of the invention, for a printer for which a printer driver is already installed, another printer driver of a different type can be installed, even in an environment with the above-described issue.

Web Services for Device (hereinafter may also be referred to as "WSD") has been introduced from Windows (registered trademark) VISTA. WSD is a configuration for connecting a printer to a client computer (hereinafter may also be referred to as "personal computer (PC)") that is an example of an information processing apparatus. Using a WS-Discovery function of WSD, a PC can be notified of a printer that can be connected to the PC. Further, in or after Windows (registered trademark) 8.1, a printer driver may be automatically installed in a PC, using the WS-Discovery function.

The printer driver automatically installed in the PC may not be an optimal printer driver for a user. For example, assume that, using the WS-Discovery function, a printer driver is installed in a PC in which a printer driver directly provided by a hardware vendor has never been installed. In this case, the installed printer driver is a printer driver attached to an operating system (OS).

In the present specification, two types of printer driver are described. The first type of printer driver is a printer driver attached to an OS, and referred to as an "inbox driver". This represents a device driver included in the OS or a patch of the OS. Since the inbox driver is attached to the OS, from the view point of the case where the user simply wants to use hardware, the inbox driver is highly convenient for the user because there is no need to install a driver separately. However, to support a new device which is released after release of the OS, an inbox driver is created universally. When an inbox driver is created universally, the number of functions is necessarily limited. As a result, a function specific to a model may not be available to the user. In addition, an inbox driver may not be optimal for its target model, in terms of print quality and printing performance. While the printer driver attached to the OS is referred to as an inbox driver, a printer driver directly provided by a hardware vendor is referred to as an "outbox driver". This is the second type of printer driver. To use hardware optimally, it is desirable for the user to install an outbox driver provided by the hardware vendor.

Meanwhile, once an inbox driver of a printer has been installed, a search for an applicable model of the printer by using the WS-Discovery function is inhibited by the specifications of the OS. Further, the inbox driver may be automatically installed in a device connected to a WSD port, without providing notification to the user, under a specific condition of Windows (registered trademark). This prevents an outbox driver from being installed using the WS-Discovery function.

In the present specification, when installing a printer driver, an installer includes also a printer, for which the inbox driver is already installed, in a printer model list obtained by a search using the WS-Discovery. The outbox driver thus can be installed.

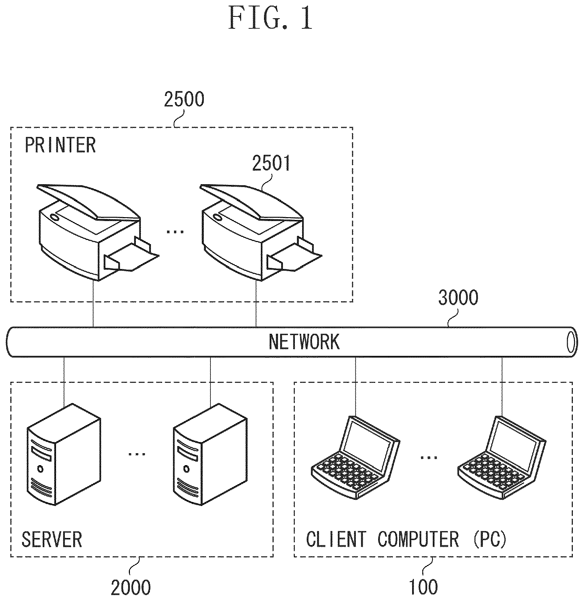

Fig. 1 is a system configuration diagram illustrating an example of a configuration of a print system to which a PC, a server, and a printing apparatus of a print processing system according to a first embodiment of the present invention are applicable to this print system. The print system according to the present embodiment includes one or a plurality of client computers (hereinafter referred to as PCs) 100 (each provided per user, for example), one or a plurality of servers 2000 (each installed per floor, for example), one or a plurality of printers 2500 (each installed per floor, for example). This print system has such a configuration that the PCs 100, the servers 2000, and the printers 2500 are connected via a network 3000. The network 3000 includes small to large networks, such as a personal area network (PAN) and a local area network (LAN). The above-described devices are connected to all these networks. Alternatively, a server and a printer in a cloud environment may be connected.

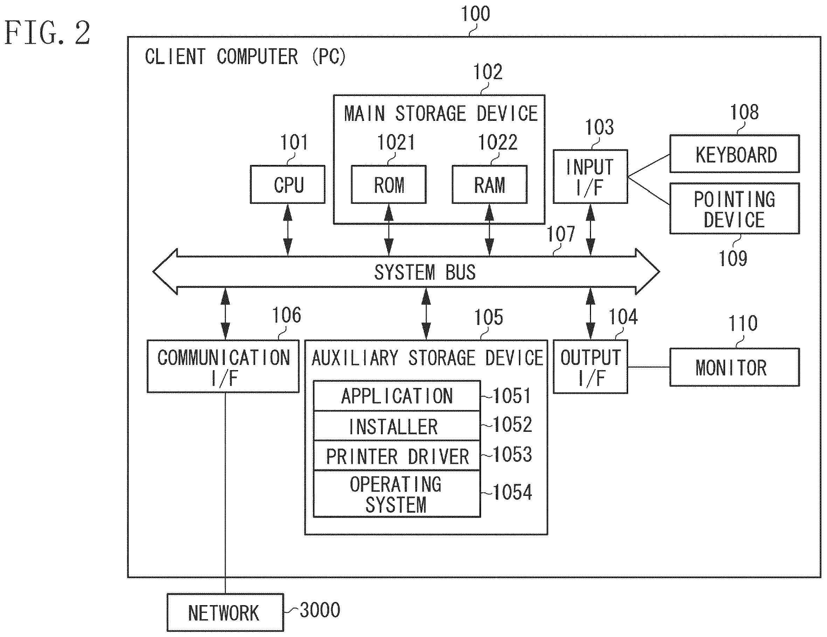

WSD is one type of protocol of a printer port for network connection of the printer 2500 to the servers 2000 or the PCs 100. One of the functions of WSD is the WS-Discovery function. Using the WS-Discovery function, a PC can be notified of a printer that can be connected to the PC. A user can select an applicable printer (e.g., a printer 2501) from a list of a search result, and install a printer driver for the selected printer. Further, in a specific network environment, a printer driver (hereinafter may be simply referred to as "driver") 1053 (illustrated in Fig. 2) for the printer 2501 which is connected may be automatically installed.

Fig. 2 is a block diagram mainly illustrating hardware of a typical computer representing the PC 100 according to the present embodiment. A central processing unit (CPU) 101 controls the entire PC 100 according to a program stored in a read only memory (ROM) 1021 or a random access memory (RAM) 1022 of a main storage device 102, or stored in an auxiliary storage device 105. In addition, the CPU 101 executes processing based on a program stored in the auxiliary storage device 105 to implement a software configuration of the PC 100 illustrated in Fig. 2 and each step of flowcharts to be described below. The RAM 1022 is also used as a work area when the CPU 101 performs various kinds of processing. The auxiliary storage device 105 stores various programs including an application 1051, an installer 1052, a printer driver 1053, and an OS 1054. The installer 1052 described in the present specification is software for installing a version 4 (V4) outbox driver. The V4 printer driver runs in a new architecture introduced from Windows (registered trademark) 8. Input devices are connected to the PC 100 via an input interface (I/F) 103. The input devices include a keyboard 108, and a pointing device 109 represented by a mouse and a touch panel. An output device, such as a monitor 110 is connected to an output I/F 104, and displays a user interface (UI) according to an instruction of a program. User operation for a program is received via these input and output devices. A communication I/F 106 is connected to the network 3000, and allows communication with an external device of the PC 100. Examples of the external device include any of the servers 2000 and the printers 2500 illustrated in Fig. 1. The above-described modules are connected by a common data system bus 107 and thereby allowed to exchange data. The programs (1051 to 1054) can be added to the auxiliary storage device 105 via a compact disc-read-only memory (CD-ROM) or a Universal Serial Bus (USB) memory (not illustrated). The programs (1051 to 1054) can also be added to the auxiliary storage device 105 via the network 3000. It goes without saying that the present technology can be applied to any type of device configuration if a function of the present technology is executed, unless otherwise specified. Any type of configuration may be employed, including a single device, a system configured of a plurality of devices, and a system in which connection is established via a network, such as a LAN and a wide area network (WAN) and processing is performed.

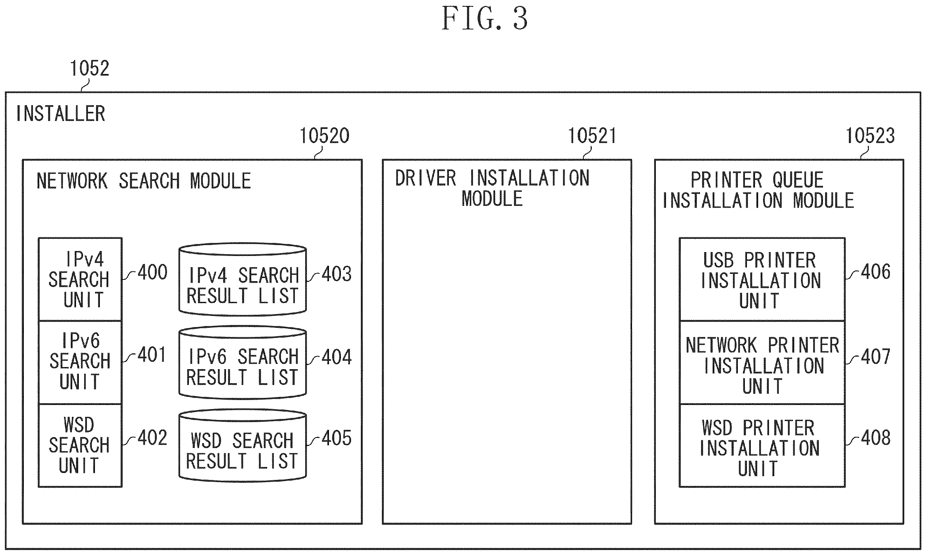

Fig. 3 is a diagram illustrating an example of a block diagram of an installer module according to the present embodiment. The block diagram includes, basically, a network search module 10520, a driver installation module 10521, and a printer queue installation module 10523. These software modules are stored in the auxiliary storage device 105. In response to a user request or a request from other systems, any of these software modules is loaded from the auxiliary storage device 105 into the RAM 1022, and then executed by the CPU 101.

The network search module 10520 includes an Internet Protocol version (IPv) 4 search unit 400, an IPv6 search unit 401, and a WSD search unit 402. The network search module 10520 has a function of searching for a printer, which is connected via the network 3000 and for which a printer driver can be installed. Searching protocols include IPv4, IPv6, and WSD. According to an instruction of the user, the network search module 10520 communicates with the printers 2500 using each of the protocols, and lists the models of printers for each of which a printer driver can be installed. The IPv4 search unit 400 stores a list of a search result into an IPv4 search result list 403. The IPv6 search unit 401 stores a list of a search result into an IPv6 search result list 404. The WSD search unit 402 stores a list of a search result into a WSD search result list 405. In particular, when WSD is used, the network search module 10520 uses a special method called WS-Discovery to search for a printer for which a printer driver can be installed. When the WS-Discovery is used, a printer for which a printer driver is already installed in the PC 100 by using WSD is excluded from search targets. Therefore, such a printer is not listed as a printer for which the printer driver can be installed.

The driver installation module 10521 is a module for installing a printer driver.

The printer queue installation module 10523 includes a USB printer installation unit 406, a network printer installation unit 407, and a WSD printer installation unit 408. The USB printer installation unit 406 installs the printer driver 1053, which is a target driver, using the driver installation module 10521 beforehand. The USB printer installation unit 406 then performs USB plug-and-play installation. In the plug-and-play installation, the OS 1054 performs installation and setting of the printer driver 1053 automatically, when the printer 2501 is connected to the PC 100. With this method, the user can cause automatic installation of the printer driver 1053, by merely connecting the PC 100 to the printer 2501 with a cable according to a procedure. Therefore, this is a technique improving usability. For the WSD port as well, plug-and-play installation is performed. In this case, the WSD printer installation unit 408 installs a printer driver. When the WSD port is used, it is not necessary to connect a cable. The user can cause automatic installation of the printer driver, only by selecting the printer 2501 as a target printer from a list of printers found by a search, according to a procedure.

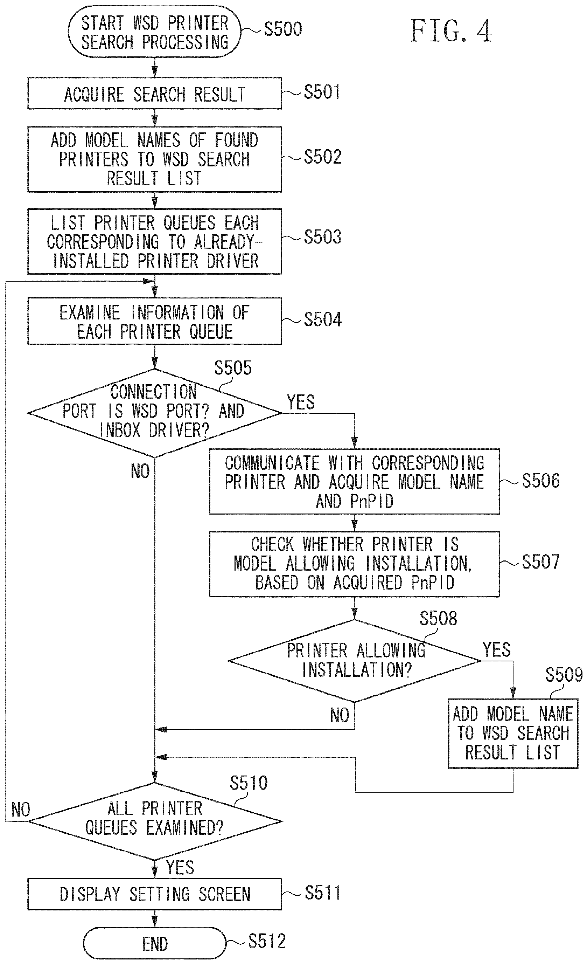

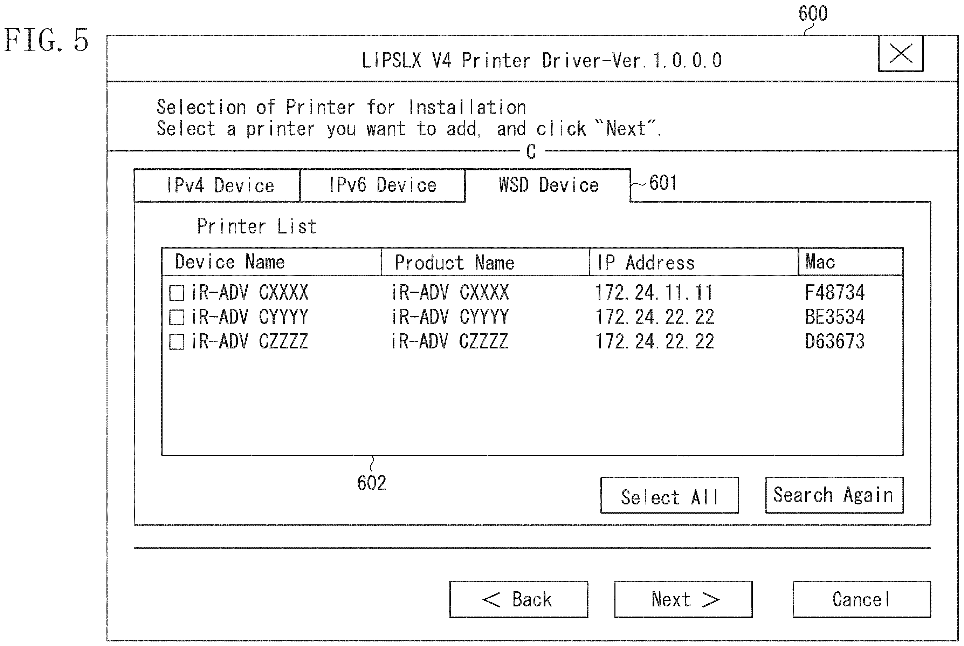

WSD printer search processing according to the present embodiment will be described with reference to a flowchart illustrated in Fig. 4. First, in step S500, processing in the flowchart begins. Specifically, when the user starts the installer 1052, display changes to a printer search screen 600 illustrated in Fig. 5. The user then selects a WSD device tab 601 to issue a WSD printer search request. Upon receipt of the WSD printer search request, the processing in the flowchart begins. The installer 1052 performs each step of the flowchart, unless otherwise specified. In step S501, the WS-Discovery function of the WSD search unit 402 is used, and the installer 1052 acquires a search result from the OS as a list of printers supporting WSD plug-and-play installation. In the search result, there are included printers which are on the network and found by the search. A printer for which an inbox driver or an outbox driver is already installed in the PC 100 is excluded by the OS from the found printers. Next, in step S502, the installer 1052 adds model names of the respective printers found by the search, to the WSD search result list 405. The WSD search result list 405 is a list for displaying the printers found by the search on the printer search screen 600. In step S503, the installer 1052 lists printer queues each corresponding to a printer driver already installed in the PC 100, and stores the listed printer queues into a memory as a printer queue list.

In step S504 and subsequent steps, the installer 1052 performs processing for each of the printer queues listed in step S503. In step S504, the installer 1052 examines information of a printer queue under the processing. In step S505, the installer 1052 determines whether the connection port of the printer queue under the processing is the WSD port, and whether a printer driver corresponding to the printer queue under the processing is an inbox driver, based on the information of the printer queue acquired in step S504. If the connection port is not the WSD port or the printer driver is not an inbox driver (NO in step S505), the printer queue does not correspond to a target printer, and therefore the installer 1052 examines the next printer queue in the printer queue list. If the connection port is the WSD port and the printer driver is an inbox driver (YES in step S505), the processing proceeds to step S506.

In step S506, the installer 1052 communicates with the printer 2501 for which an inbox driver is installed in the PC 100 to acquire a model name and a plug-and-play identification (PnPID) thereof. The PnPID is an ID that uniquely identifies a printer driver at the time of plug-and-play installation.

Next, in step S507, based on the acquired PnPID, the installer 1052 checks whether the printer 2501 is a model for which an outbox driver can be installed. The PnPID is an ID selected from options and set in a printer. The options include both V3 and V4. Therefore, the PnPID of the printer 2501 for which an inbox driver is already installed may not be a PnPID supporting a V4 driver. In this case, even if the WSD plug-and-play installation is performed, installation of the V4 driver fails. For this reason, it is necessary to check the PnPID beforehand to find whether a V4 outbox driver can be installed. Therefore, it is possible to identify a printer for which an outbox driver can be installed, by communicating with a printer for which an inbox driver is already installed. In step S508, based on the checking, the installer 1052 determines whether the PnPID is a PnPID corresponding to a printer for which an outbox driver can be installed. If the PnPID is not a PnPID that allows installation (NO in step S508), the corresponding printer is not a target printer. Therefore, the installer 1052 examines the next printer queue in the printer queue list. If the PnPID is a PnPID that allows installation (YES in step S508), the processing proceeds to step S509. In step S509, the installer 1052 adds the model name to the WSD search result list 405, based on the information of the corresponding printer queue among the printer queues listed in step S503.

In step S510, the installer 1052 determines whether the above-described examination is performed for all the printer queues each corresponding to a printer driver installed on the PC 100. When the examination is completed for all the printer queues (YES in step S510), the processing proceeds to step S511. In step S511, the installer 1052 displays a list 602 of printers that each support the WSD plug-and-play installation. The list 602 is created by the processing in step S502 and step S509.

Fig. 5 is a diagram illustrating a list display screen 602, which is an example of the list of the printers each supporting the WSD plug-and-play installation. In this example, "iR-ADV CXXXX" and "iR-ADV CYYYY" are printers found by the WS-Discovery. A printer named "iR-ADV CZZZZ" in the last line is a printer for which an inbox driver is already installed by the WSD plug-and-play installation. In the present specification, it is possible to display a printer as if the printer is found by the WS-Discovery, by performing the processing in step S509 illustrated in Fig. 4. In this way, a printer (A) in a search result acquired from the OS 1054 and a printer (B) identified by step S506 and step S507 can be both displayed as candidates for a printer for which an outbox driver is to be installed. In the example illustrated in Fig. 5, both the printer (A) and the printer (B) are displayed in a single screen. However, these printers may be separately displayed in different screens.

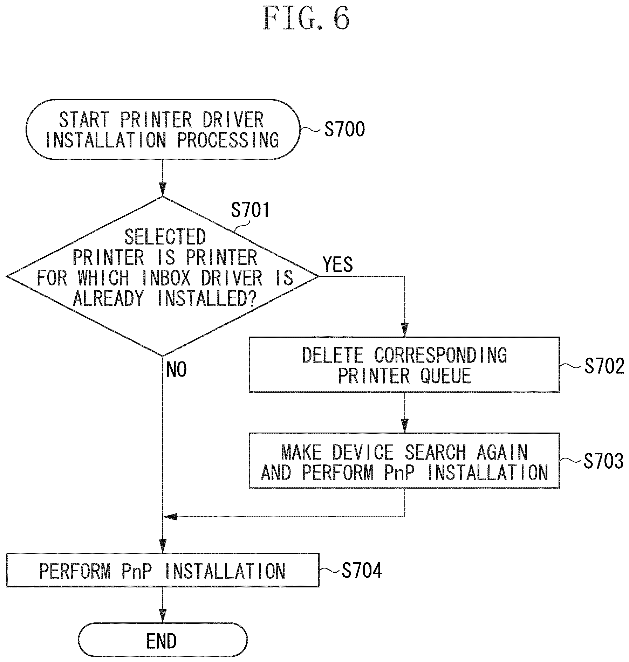

Next, printer driver installation processing using WSD according to the present embodiment will be described with reference to a flowchart illustrated in Fig. 6. In step S700, the printer driver installation processing begins, when the user presses a Next button, after selecting a desired printer from the list display screen 602. The list display screen 602 includes the printers supporting the WSD plug-and-play installation, which are found in the search by the installer 1052. Next, in step S701, the installer 1052 checks whether the selected printer 2501 is a printer for which an inbox driver is already installed. Described below is a conceivable way of checking whether the selected printer 2501 is a printer for which an inbox driver is already installed. First, when the printer is added to the WSD search result list 405 in step S509, a flag indicating that an inbox driver is installed is set. Next, it is determined whether the selected printer is a printer for which an inbox driver is installed, referring to the flag. However, the way of checking is not limited to this example.

When the selected printer 2501 is not a printer for which an inbox driver is already installed (NO in step S701), the processing proceeds to step S704. In step S704, the installer 1052 performs normal WSD plug-and-play installation processing. When the selected printer 2501 is a printer for which an inbox driver is already installed (YES in step S701), the processing proceeds to step S702. In step S702, the installer 1052 deletes the corresponding printer queue. As a result, the inbox driver is deleted. In step S703, the installer 1052 finds the applicable printer 2501 by making the WSD device search using the WS-Discovery again, and then performs the WSD plug-and-play installation for the found printer.

In this way, when a printer for which an inbox driver is already installed is selected as a printer for which an outbox driver is to be installed, the inbox driver is deleted. Subsequently, a search is made to find a printer on the network, and the outbox driver is installed for the found driver.

Using the above-described procedure, an outbox driver can be installed for the printer 2501, even if an inbox driver is already installed by the WSD plug-and-play installation for the printer 2501. This allows installation of a driver optimal for a printer.

In the method described in the first embodiment, the inbox driver which is already installed is automatically deleted in step S702. However, there arises an issue that whether the deleted printer driver is a driver intentionally installed by the user cannot be determined. If the deleted printer driver is a driver intentionally installed by the user, the inbox driver is replaced with an outbox driver, contrary to the intention of the user at the time when the inbox driver is installed.

In a second embodiment, a solution to such an issue is provided. In this solution, before deleting the corresponding printer queue in step S702, the user is notified of a message saying that the printer queue corresponding to the printer driver which is already installed is to be deleted.

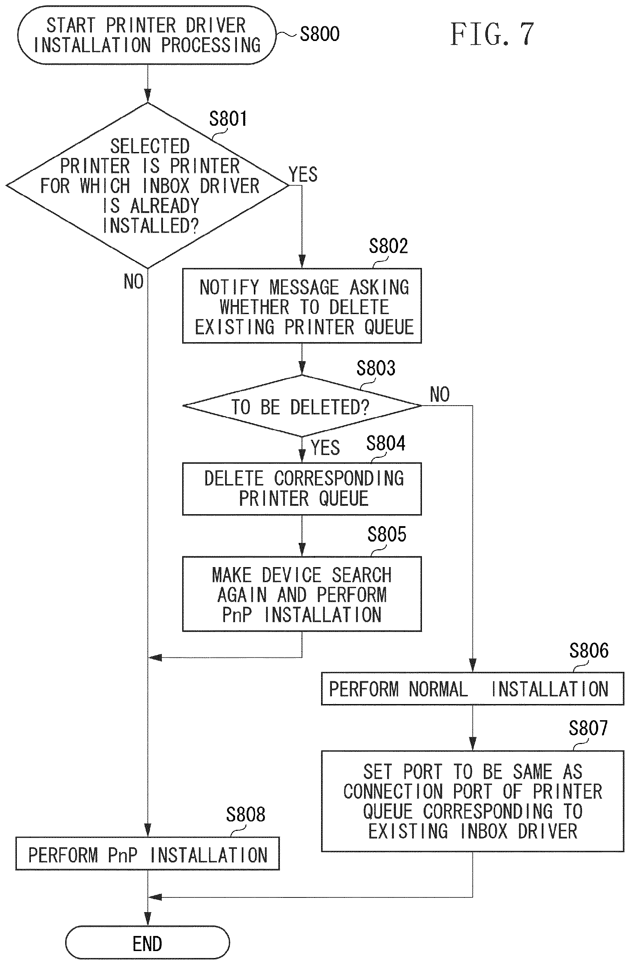

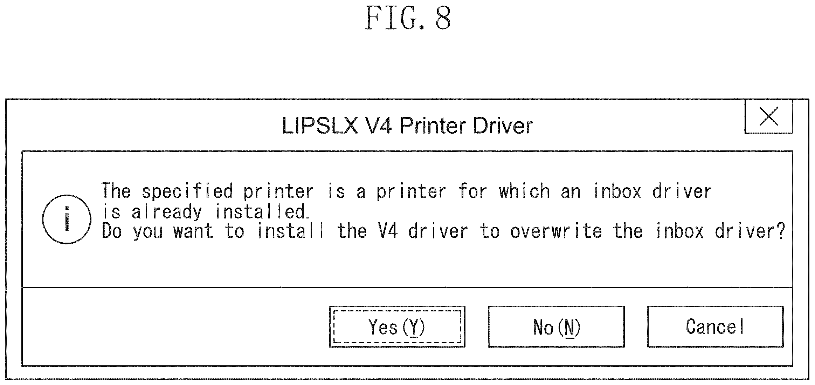

Fig. 7 is a flowchart illustrating the above-described solution. Step S800 and step S801 are similar to step S700 and step S701 of the first embodiment, and therefore will not be described. If the selected printer is not a printer for which an inbox driver is already installed (NO in step S801), the processing proceeds to step S808. In step S808, the installer 1052 performs the normal WSD plug-and-play installation processing. If the selected printer is a printer for which an inbox driver is already installed (YES in step S801), the processing proceeds to step S802. In step S802, the installer 1052 notifies the user via a message asking whether to delete the corresponding printer queue, i.e. the existing printer queue. For example, a message dialog illustrated in Fig. 8 may be displayed to prompt the user to select whether to delete the inbox driver. In step S803, the installer 1052 determines whether an instruction for deleting the inbox driver is received. If the existing printer queue is to be deleted according to the selection by the user, i.e., when an instruction for deleting the inbox driver is received (YES in step S803), the processing proceeds to step S804. In step S804, the installer 1052 deletes the existing printer queue. Subsequently, in step S805, the WSD device search is executed using the WS-Discovery again, and then the installer 1052 performs the WSD plug-and-play installation for the applicable printer 2501 found by the search. Step S804 and step S805 are similar to step S702 and step S703 of the first embodiment.

If the existing printer queue is not to be deleted according to the selection by the user (NO in step S803), the installer 1052 performs installation by using a method for changing the connection port, without performing the WSD plug-and-play installation. First, in step S806, the installer 1052 installs the outbox driver for the applicable printer 2501. Next, in step S807, upon completion of the installation of the outbox driver, the installer 1052 sets a connection port of a printer queue created by the installation of the outbox driver, to be the same port as the WSD port of the printer queue corresponding to the existing inbox driver.

Using the above-described procedure, it is possible to install a new outbox driver, while maintaining a printer queue corresponding to a printer for which an inbox driver is already installed by the WSD plug-and-play installation. The user can thereby carry out printing, by selecting either the existing printer driver or the new printer driver appropriately.

The first and second embodiments are described assuming that the driver, which corresponds to the PnPID set in the printer 2501 for the plug-and-play installation, is V4. However, an ID of a V3 driver may be set as the PnPID in the printer 2501. In this case, the WSD plug-and-play installation may fail, or a printer driver not intended by the user may be installed.

In a third embodiment, a solution to such an issue is provided. In this solution, even if the driver corresponding to the PnPID set in the printer 2501 is V3, a V4 driver can be installed. This solution will be described.

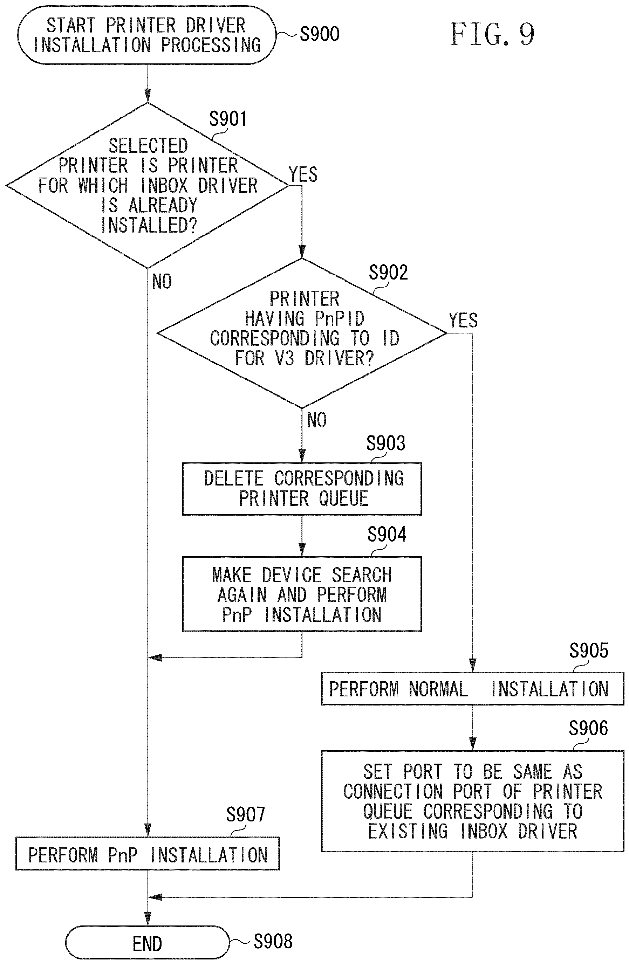

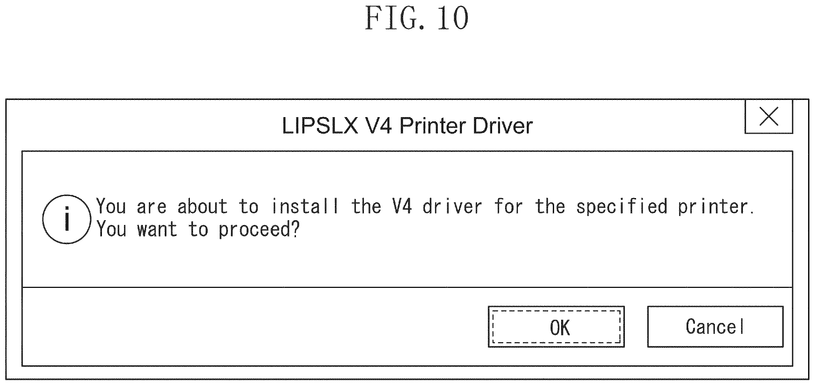

Fig. 9 is a flowchart illustrating the above-described solution. Step S900 and step S901 are similar to step S700 and step S701 of the first embodiment, and therefore will not be described. If the selected printer is not a printer for which an inbox driver is already installed (NO in step S901), the processing proceeds to step S907. In step S907, the installer 1052 performs the normal WSD plug-and-play installation processing. If the selected printer is a printer for which an inbox driver is already installed (YES in step S901), the processing proceeds to step S902. In step S902, the installer 1052 checks whether the PnPID set in the printer is an ID for a V3 driver. Specifically, the installer 1052 checks whether the PnPID matches a PnPID set as an attribute of the V3 driver, by communicating with the printer 2501. The installer 1052 may check whether the PnPID is an ID for a V4 driver in step S902. In this case, YES and NO are reversed in step S902. If the PnPID is not an ID for a V3 driver (NO in step S902), the processing proceeds to step S903 and then step S904 to perform the WSD plug-and-play installation. Step S903 and step S904 are similar to step S702 and step S703 of the first embodiment, and therefore will not be described. If the PnPID is an ID for a V3 driver (YES in step S902), the processing proceeds to step S905. In step S905, the installer 1052 performs installation and then changing the connection port. The installer 1052 may request the user to confirm whether to install the V4 driver, when the PnPID is determined to an ID for a V3 driver. For example, a message dialog illustrated in Fig. 10 may be displayed to obtain confirmation from the user. However, the method for confirmation is not limited to this example. Step S905 and step S906 for performing the installation and then changing the connection port are similar to step S806 and step S807 of the second embodiment, and therefore will not be described.

Using the above-described procedure, it is possible to install a V4 driver intended by the user, even if the PnPID of a printer for which an inbox driver is installed by the WSD plug-and-play installation is an ID for a V3 driver.

The second embodiment is described assuming that it is unknown whether an already-installed printer driver is a printer driver intended by the user. In a fourth embodiment, whether an existing printer queue corresponds to an automatically installed printer driver can be determined, and if yes, only the determined printer queue is deleted and then an outbox driver is installed. This method will be described below.

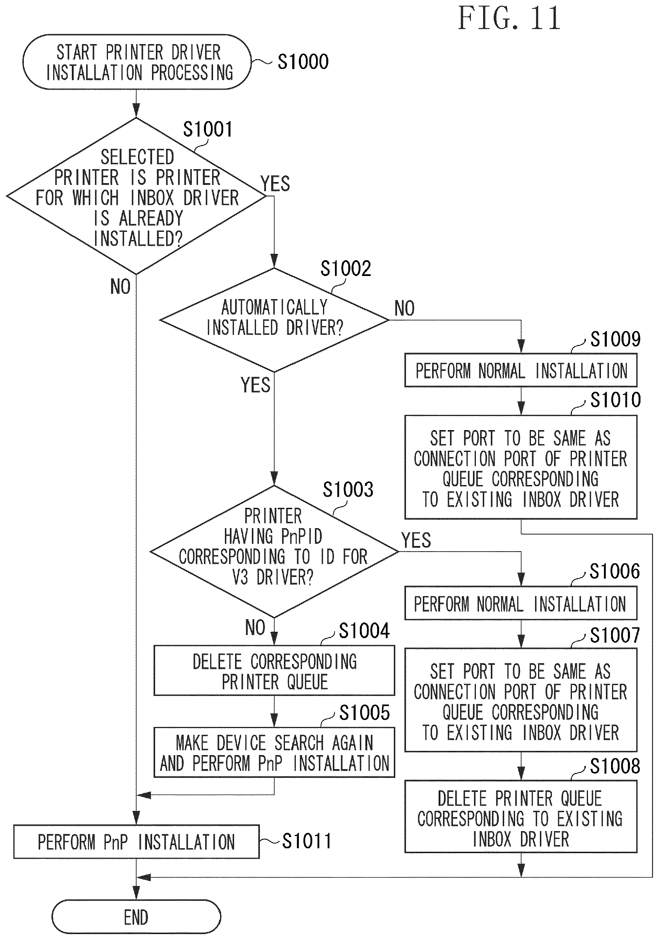

Fig. 11 is a flowchart illustrating an example of the above-described method. In this method, it is determined whether an existing printer driver is an automatically installed printer driver. If yes, a printer queue corresponding to the existing printer driver is deleted, and if not, a printer driver is installed to coexist with the printer driver corresponding to the existing printer queue.

First, step S1001 is similar to step S701 of the first embodiment, and therefore will not be described. If the selected printer is not a printer for which an inbox driver is already installed (NO in step S1001), the processing proceeds to step S1011. In step S1011, the installer 1052 performs the normal WSD plug-and-play installation processing.

If the selected printer is a printer for which an inbox driver is already installed (YES in step S1001), the processing proceeds to step S1002. In step S1002, the installer 1052 checks whether the corresponding inbox driver is an automatically installed driver. There will be described two specific methods for checking whether the corresponding inbox driver is an automatically installed driver. The first one is a method for checking whether an attribute indicating that an inbox driver is automatically installed is attached. The second one is a method using an application programming interface (API) for finding whether an inbox driver prepared in the OS 1054 is automatically installed. A method to be employed is not limited to these two methods, as long as the method can check whether the corresponding inbox driver is an automatically installed driver.

If the corresponding inbox driver is not an automatically installed driver (NO in step S1002), the processing proceeds to step S1009 and step S1010 to perform installation and then change the connection port. Step S1009 and step S1010 for performing the installation and then changing the connection port are similar to step S806 and step S807 of the second embodiment, and therefore will not be described.

If the corresponding inbox driver is an automatically installed driver (YES in step S1002), the processing proceeds to step S1003. In step S1003, the installer 1052 checks whether the PnPID set in the printer 2501 is an ID for a V3 driver. If the PnPID is not an ID for a V3 driver (NO in step S1003), the processing proceeds to step S1004 and S1005 to perform the WSD plug-and-play installation. Step S1004 and step S1005 for performing the WSD plug-and-play installation are similar to step S702 and step S703 of the first embodiment, and therefore will not be described. If the PnPID is an ID for a V3 driver (YES in step S1003), the processing proceeds to step S1006 and step S1007 to set a connection port after installation, without performing the WSD plug-and-play installation. Step S1006 and step S1007 for setting a connection port after installation are similar to step S806 and step S807 of the second embodiment, and therefore will not be described. In step S1008, the installer 1052 deletes the printer queue corresponding to the existing inbox driver.

In the above-described procedure, if a printer queue corresponds to an automatically installed printer driver, i.e., a printer driver unintended by the user, the printer queue is automatically deleted when a new driver is installed. If a printer queue corresponds to a printer driver intentionally installed by the user, the printer queue is not deleted. It is therefore possible to provide a printing environment reflecting the intention of the user.

According to the embodiments, for a printer for which a printer driver is already installed, a different type of printer driver can be installed.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of this invention, which is defined by the appended claims.

## Claims

1. An information processing apparatus comprising:
acquisition means (402) for acquiring (S501) a search result of printers on a network from an operating system, printers for each of which a first type of printer driver has been installed and printers for each of which a second type of printer driver has been installed being excluded from the search result, the search result listing printers for which the second type of printer driver can be installed;
identification means (1052) for identifying (S507) a printer for which the second type of printer driver is installable, from among the printers for each of which the first type of printer driver has been installed;
display means (1052) for displaying (S511) a screen for selecting, from the printers included in the search result acquired by the acquisition means and the printer identified by the identification means, a printer for which the second type of printer driver is to be installed; and
installation means for installing the second type of printer driver corresponding to a printer selected based on a user operation via the screen,
wherein the installation means is configured to:
if a printer for which the first type of printer driver has been installed is selected as the printer for which the second type of printer driver is to be installed, delete (S702) a printer queue associating the first type of printer driver with the selected printer, search (S703) for printers on the network, find the selected printer by means of the search for printers, and install the second type of printer driver corresponding to the found printer,
if the selected printer is included in the search result, install (S704) the second type of printer driver corresponding to the selected printer,
and to generate a printer queue to associate the installed second type of printer driver with the selected printer.

2. The information processing apparatus according to claim 1, further comprising:
reception means for, if a printer for which the first type of printer driver has been installed is selected as the printer for which the second type of printer driver is to be installed, requesting (S802) the user to confirm whether to delete the first type of printer driver and receiving (S803) from a user an instruction as to whether to delete the first type of printer driver; and
wherein, only in the case that the reception means receives an instruction for deleting the first type of printer driver, the installation means is configured to delete (S804) the printer queue associating the first type of printer driver with the selected printer, search (S805) for printers on the network, find the selected printer by means of the search for printers, and install (S805) the second type of printer driver corresponding to the found printer.

3. The information processing apparatus according to claim 2, wherein, if the reception means receives an instruction for not deleting the first type of printer driver, the installation means is configured to install (S806) the second type of printer driver and to set (S807) a connection port of a printer queue created for the second type of printer driver to be a same port as a WSD port of a printer queue corresponding to the first type of printer driver.

4. The information processing apparatus according to any preceding claim, further comprising:
determination means for determining (S902) whether an ID of a printer driver for the printer for which the first type of printer driver has been installed is an ID of a printer driver of a specific version; and
wherein the installation means is configured, only in the case that the determination means determines that the ID of the printer driver for the printer for which the first type of printer driver has been installed is the ID of the printer driver of the specific version, to delete (S903) the printer queue associating the first type of printer driver with the selected printer, search (S904) for printers on the network, find the selected printer by means of the search for printers, and install (S904) the second type of printer driver corresponding to the found printer.

5. The information processing apparatus according to claim 4, wherein the determination means further determines whether the first type of printer driver is an automatically installed printer driver, and
wherein, only in the case that the determination means determines that the first type of printer driver is the automatically installed printer driver, and the ID of the first type of printer driver is the ID of the printer driver of the specific version, the installation means is configured to delete (S1004) the printer queue associating the first type of printer driver with the selected printer, search (S1005) for printers on the network, find the selected printer by means of the search for printers, and install (S1005) the second type of printer driver corresponding to the found printer.

6. The information processing apparatus according to any preceding claim, wherein the identification means is configured to identify the printer for which the second type of printer driver is installable, from among the printers for which the first type of printer driver has been installed, by communicating with the printers for which the first type of printer driver has been installed.

7. A control method comprising:
an acquisition step (S501) of acquiring a search result of printers on a network from an operating system, printers for each of which a first type of printer driver has been installed and printers for each of which a second type of printer driver has been installed being excluded from the search result, the search result listing printers for which the second type of printer driver can be installed;
an identification step (S507) of identifying a printer for which the second type of printer driver is installable, from among the printers for which the first type of printer driver has been installed;
a display step (S511) of displaying a screen for selecting, from the printers included in the acquired search result and the identified printer, a printer for which the second type of printer driver is to be installed; and
an installation step of installing the second type of printer driver corresponding to a printer selected based on a user operation via the screen,
wherein the installation step comprises:
if a printer for which the first type of printer driver has been installed is selected as the printer for which the second type of printer driver is to be installed, deleting (S702) a printer queue associating the first type of printer driver with the selected printer, searching (S703) for printers on the network, finding the selected printer by means of the search for printers, and installing (S704) the second type of printer driver corresponding to the found printer,
if the selected printer is included in the search result, installing (S704) the second type of printer driver corresponding to the selected printer,
and generating a printer queue to associate the installed second type of printer driver with the selected printer.

8. The control method according to claim 7, further comprising:
a reception step of receiving (S803) from a user an instruction as to whether to delete the first type of printer driver, by requesting (S802) the user to confirm whether to delete the first type of printer driver, if a printer for which the first type of printer driver has been installed is selected as the printer for which the second type of printer driver is to be installed; and
wherein the installation step, only in the case that an instruction for deleting the first type of printer driver is received in the reception step, comprises deleting (S804) the printer queue associating the first type of printer driver with the selected printer, searching (S805) for printers on the network, finding the selected printer by means of the search for printers, and installing (S805) the second type of printer drive corresponding to the found printer.

9. The control method according to claim 8, wherein, if an instruction for not deleting the first type of printer driver is received in the reception step, the installation step comprises installing (S806) the second type of printer driver and setting (S807) a connection port of a printer queue created for the second type of printer driver to be a same port as a WSD port of a printer queue corresponding to the first type of printer driver in the installation step.

10. The control method according to any one of claims 7 to 9, further comprising:
a determination step (S902) of determining whether an ID of a printer driver for the printer for which the first type of printer driver has been installed is an ID of a printer driver of a specific version; and
wherein the installation step comprises deleting (S903) the printer queue associating the first type of printer driver with the selected printer, searching (S904) for printers on the network, finding the selected printer by means of the search for printers, and installing (S904) the second type of printer driver corresponding to the found printer, only in the case that it is determined in the determination step that the ID of the printer driver for the printer for which the first type of printer driver has been installed is the ID of the printer driver of the specific version.

11. The control method according to claim 10, wherein it is further determined in the determination step whether the first type of printer driver is an automatically installed printer driver, and
wherein, only in the case that it is determined in the determination step that the first type of printer driver is the automatically installed printer driver, and the ID of the first type of printer driver is the ID of the printer driver of the specific version, the installation step comprises deleting (S1004) the printer queue associating the first type of printer driver with the selected printer, searching (S1005) for printers on the network, finding the selected printer by means of the search for printers, and installing (S1005) the second type of printer driver corresponding to the found printer.

12. The control method according to any one of claims 7 to 11, wherein the printer for which the second type of printer driver is installable is identified in the identification step, from among the printers for which the first type of printer driver has been installed, by communicating with the printers for which the first type of printer driver has been installed.

13. A program comprising instructions which, when executed on a device, cause the device to execute a method according to any one of claims 7 to 12.

14. A computer-readable storage medium storing a program according to claim 13.

## Patentansprüche

1. Informationsverarbeitungsvorrichtung, umfassend:
eine Erfassungseinrichtung (402) zum Erfassen (S501) eines Suchergebnisses von Druckern an einem Netz von einem Betriebssystem, wobei Drucker, für die jeweils ein erster Druckertreibertyp installiert worden ist, und Drucker, für die jeweils ein zweiter Druckertreibertyp installiert worden ist, vom Suchergebnis ausgenommen sind, wobei das Suchergebnis Drucker auflistet, für welche der zweite Druckertreibertyp installiert werden kann;
eine Identifizierungseinrichtung (1052) zum Identifizieren (S507) eines Druckers, für welchen der zweite Druckertreibertyp installiert werden kann, unter den Druckern, für welche jeweils der erste Druckertreibertyp installiert worden ist;
eine Anzeigeeinrichtung (1052) zum Anzeigen (S511) eines Bildschirms zum Auswählen, unter den im von der Erfassungseinrichtung erfassten Suchergebnis enthaltenen Druckern und dem durch die Identifizierungseinrichtung identifizierten Drucker, eines Druckers, für welchen der zweite Druckertreibertyp installiert werden soll; und
eine Installationseinrichtung zum Installieren des einem basierend auf einer Benutzerbedienung über den Bildschirm ausgewählten Drucker entsprechenden zweiten Druckertreibertyps,
wobei die Installationseinrichtung konfiguriert ist:
falls ein Drucker, für welchen der erste Druckertreibertyp installiert worden ist, als derjenige Drucker ausgewählt wird, für welchen der zweite Druckertreibertyp installiert werden soll, eine den ersten Druckertreibertyp dem ausgewählten Drucker zuordnende Druckerwarteschlange zu löschen (S702), nach Druckern am Netz zu suchen (S703), den ausgewählten Drucker mithilfe der Suche nach Druckern zu finden und den dem gefundenen Drucker entsprechenden zweiten Druckertreibertyp zu installieren,
falls der ausgewählte Drucker im Suchergebnis enthalten ist, Installieren (S704) des dem ausgewählten Drucker entsprechenden zweiten Druckertreibertyps,
und eine Druckerwarteschlange zu erzeugen, um den installierten zweiten Druckertreibertyp dem ausgewählten Drucker zuzuordnen.

2. Informationsverarbeitungsvorrichtung nach Anspruch 1, ferner umfassend:
eine Empfangseinrichtung zum, falls ein Drucker, für welchen der erste Druckertreibertyp installiert worden ist, als derjenige Drucker ausgewählt wird, für welchen der zweite Druckertreibertyp zu installieren ist, Auffordern (S802) des Benutzers, zu bestätigen, ob der erste Druckertreibertyp zu löschen ist, und Empfangen (S803) einer Anweisung von einem Benutzer dahingehend, ob der erste Druckertreibertyp zu löschen ist; und
wobei, nur falls die Empfangseinrichtung eine Anweisung zum Löschen des ersten Druckertreibertyps empfängt, die Installationseinrichtung konfiguriert ist, die den ersten Druckertreibertyp dem ausgewählten Drucker zuordnende Druckerwarteschlange zu löschen (S804), nach Druckern am Netz zu suchen (S805), den ausgewählten Drucker mithilfe der Suche nach Druckern zu finden und den dem gefundenen Drucker entsprechenden zweiten Druckertreibertyp zu installieren (S805).

3. Informationsverarbeitungsvorrichtung nach Anspruch 2, wobei, falls die Empfangseinrichtung eine Anweisung des Nichtlöschens des ersten Druckertreibertyps empfängt, die Installationseinrichtung konfiguriert ist, den zweiten Druckertreibertyp zu installieren (S806) und einen Verbindungsport einer für den zweiten Druckertreibertyp erzeugten Druckerwarteschlange so einzustellen (S807), dass er ein selber Port wie ein WSD-Port einer dem ersten Drucktreibertyp entsprechenden Druckerwarteschlange ist.

4. Informationsverarbeitungsvorrichtung nach einem der vorhergehenden Ansprüche, ferner umfassend:
eine Bestimmungseinrichtung zum Bestimmen (S902), ob eine ID eines Druckertreibers für den Drucker, für welchen der erste Druckertreibertyp installiert worden ist, eine ID eines Druckertreibers einer spezifischen Version ist; und
wobei die Installationseinrichtung konfiguriert ist, nur falls die Bestimmungseinrichtung bestimmt, dass die ID des Druckertreibers für den Drucker, für welchen der erste Druckertreiber installiert worden ist, die ID des Druckertreibers der spezifischen Version ist, die den ersten Druckertreibertyp dem ausgewählten Drucker zuordnende Druckerwarteschlange zu löschen (S903), nach Druckern am Netz zu suchen (S904), den ausgewählten Drucker mithilfe der Suche nach Druckern zu finden und den dem gefundenen Drucker entsprechenden zweiten Druckertreibertyp zu installieren (S904).

5. Informationsverarbeitungsvorrichtung nach Anspruch 4, wobei die Bestimmungseinrichtung ferner bestimmt, ob der erste Druckertreibertyp ein automatisch installierter Druckertreiber ist, und
wobei, nur falls die Bestimmungseinrichtung bestimmt, dass der erste Druckertreibertyp der automatisch installierte Druckertreiber ist, und die ID des ersten Druckertreibertyps die ID des Druckertreibers der spezifischen Version ist, die Installationseinrichtung konfiguriert ist, die den ersten Druckertreibertyp dem ausgewählten Drucker zuordnende Druckerwarteschlange zu löschen (S1004), nach Druckern am Netz zu suchen (S1005), den ausgewählten Drucker mithilfe der Suche nach Druckern zu finden und den dem gefundenen Drucker entsprechenden zweiten Druckertreibertyp zu installieren (S1005).

6. Informationsverarbeitungsvorrichtung nach einem der vorhergehenden Ansprüche, wobei die Identifizierungseinrichtung konfiguriert ist, unter den Druckern, für welche der erste Druckertreibertyp installiert worden ist, den Drucker zu identifizieren, für welchen der zweite Druckertreibertyp installiert werden kann, durch Kommunizieren mit den Druckern, für welche der erste Druckertreibertyp installiert worden ist.

7. Steuerverfahren, umfassend:
einen Erfassungsschritt (S501) des Erfassens eines Suchergebnisses von Druckern an einem Netz von einem Betriebssystem, wobei Drucker, für die jeweils ein erster Druckertreibertyp installiert worden ist, und Drucker, für die jeweils ein zweiter Druckertreibertyp installiert worden ist, vom Suchergebnis ausgenommen sind, wobei das Suchergebnis Drucker auflistet, für welche der zweite Druckertreibertyp installiert werden kann;
einen Identifizierungsschritt (S507) des Identifizierens eines Druckers, für welchen der zweite Druckertreibertyp installiert werden kann, unter den Druckern, für welche der erste Druckertreibertyp installiert worden ist;
einen Anzeigeschritt (S511) des Anzeigens eines Bildschirms zum Auswählen, unter den im erfassten Suchergebnis enthaltenen Druckern und dem identifizierten Drucker, eines Druckers, für welchen der zweite Druckertreibertyp installiert werden soll; und
einen Installationsschritt des Installierens des einem basierend auf einer Benutzerbedienung über den Bildschirm ausgewählten Drucker entsprechenden zweiten Druckertreibertyps,
wobei der Installationsschritt umfasst:
falls ein Drucker, für welchen der erste Druckertreibertyp installiert worden ist, als derjenige Drucker ausgewählt wird, für welchen der zweite Druckertreibertyp installiert werden soll, Löschen (S702) einer den ersten Druckertreibertyp dem ausgewählten Drucker zuordnenden Druckerwarteschlange, Suchen (S703) nach Druckern am Netz, Finden des ausgewählten Druckers mithilfe der Suche nach Druckern und Installieren (S704) des dem gefundenen Drucker entsprechenden zweiten Druckertreibertyps,
falls der ausgewählte Drucker im Suchergebnis enthalten ist, Installieren (S704) des dem ausgewählten Drucker entsprechenden zweiten Druckertreibertyps,
und Erzeugen einer Druckerwarteschlange, um den installierten zweiten Druckertreibertyp dem ausgewählten Drucker zuzuordnen.

8. Steuerverfahren nach Anspruch 7, ferner umfassend:
einen Empfangsschritt des Empfangens (S803) einer Anweisung von einem Benutzer dahingehend, ob der erste Druckertreibertyp zu löschen ist, durch Auffordern (S802) des Benutzers, zu bestätigen, ob der erste Druckertreibertyp zu löschen ist, falls ein Drucker, für welchen der erste Druckertreibertyp installiert worden ist, als derjenige Drucker ausgewählt wird, für welchen der zweite Druckertreibertyp zu installieren ist; und
wobei, nur falls eine Anweisung zum Löschen des ersten Druckertreibertyps im Empfangsschritt empfangen wird, der Installationsschritt umfasst: Löschen (S804) der den ersten Druckertreibertyp dem ausgewählten Drucker zuordnenden Druckerwarteschlange, Suchen (S805) nach Druckern am Netz, Finden des ausgewählten Druckers mithilfe der Suche nach Druckern und Installieren (S805) des dem gefundenen Drucker entsprechenden zweiten Druckertreibertyps.

9. Steuerverfahren nach Anspruch 8, wobei, falls im Empfangsschritt eine Anweisung des Nichtlöschens des ersten Druckertreibertyps empfangen wird, der Installationsschritt umfasst: Installieren (S806) des zweiten Druckertreibertyps und Einstellen (S807), im Installationsschritt, eines Verbindungsports einer für den zweiten Druckertreibertyp erzeugten Druckerwarteschlange so, dass er ein selber Port wie ein WSD-Port einer dem ersten Drucktreibertyp entsprechenden Druckerwarteschlange ist.

10. Steuerverfahren nach einem der Ansprüche 7 bis 9, ferner umfassend:
einen Bestimmungsschritt (S902) des Bestimmens, ob eine ID eines Druckertreibers für den Drucker, für welchen der erste Druckertreibertyp installiert worden ist, eine ID eines Druckertreibers einer spezifischen Version ist; und
wobei, nur falls im Bestimmungsschritt bestimmt wird, dass die ID des Druckertreibers für den Drucker, für welchen der erste Druckertreiber installiert worden ist, die ID des Druckertreibers der spezifischen Version ist, der Installationsschritt umfasst: Löschen (S903) der den ersten Druckertreibertyp dem ausgewählten Drucker zuordnenden Druckerwarteschlange, Suchen (S904) nach Druckern am Netz, Finden des ausgewählten Druckers mithilfe der Suche nach Druckern und Installieren (S904) des dem gefundenen Drucker entsprechenden zweiten Druckertreibertyps.

11. Steuerverfahren nach Anspruch 10, wobei im Bestimmungsschritt ferner bestimmt wird, ob der erste Druckertreibertyp ein automatisch installierter Druckertreiber ist, und
wobei, nur falls im Bestimmungsschritt bestimmt wird, dass der erste Druckertreibertyp der automatisch installierte Druckertreiber ist, und die ID des ersten Druckertreibertyps die ID des Druckertreibers der spezifischen Version ist, der Installationsschritt umfasst: Löschen (S1004) der den ersten Druckertreibertyp dem ausgewählten Drucker zuordnenden Druckerwarteschlange, Suchen (S1005) nach Druckern am Netz, Finden des ausgewählten Druckers mithilfe der Suche nach Druckern und Installieren (S1005) des dem gefundenen Drucker entsprechenden zweiten Druckertreibertyps.

12. Steuerverfahren nach einem der Ansprüche 7 bis 11, wobei der Drucker, für welchen der zweite Druckertreibertyp installiert werden kann, im Identifizierungsschritt unter den Druckern identifiziert wird, für welche der erste Druckertreibertyp installiert worden ist, durch Kommunizieren mit den Druckern, für welche der erste Druckertreibertyp installiert worden ist.

13. Programm mit Anweisungen, welche bei Ausführung auf einem Device dieses veranlassen, ein Verfahren nach einem der Ansprüche 7 bis 12 auszuführen.

14. Computerlesbares Speichermedium, welches ein Programm nach Anspruch 13 speichert.

## Revendications

1. Appareil de traitement d'informations, comprenant :
un moyen d'acquisition (402) destiné à acquérir (S501) un résultat de recherche d'imprimantes sur un réseau à partir d'un système d'exploitation, des imprimantes pour chacune desquelles un premier type de pilote d'imprimante a été installé et des imprimantes pour chacune desquelles un second type de pilote d'imprimante a été installé étant exclues du résultat de recherche, le résultat de recherche établissant une liste d'imprimantes pour lesquelles le second type de pilote d'imprimante peut être installé ;
un moyen d'identification (1052) destiné à identifier (S507) une imprimante pour laquelle le second type de pilote d'imprimante peut être installé, parmi les imprimantes pour chacune desquelles le premier type de pilote d'imprimante a été installé ;
un moyen d'affichage (1052) destiné à afficher (S511) un écran permettant de sélectionner, parmi les imprimantes comprises dans le résultat de recherche acquis par le moyen d'acquisition et l'imprimante identifiée par le moyen d'identification, une imprimante pour laquelle le second type de pilote d'imprimante doit être installé ; et
un moyen d'installation destiné à installer le second type de pilote d'imprimante correspondant à une imprimante sélectionnée sur la base d'une opération d'utilisateur par le biais de l'écran,
dans lequel le moyen d'installation est configuré pour :
si une imprimante pour laquelle le premier type de pilote d'imprimante a été installé est sélectionnée en tant que l'imprimante pour laquelle le second type de pilote d'imprimante doit être installé, supprimer (S702) une file d'attente d'imprimantes associant le premier type de pilote d'imprimante à l'imprimante sélectionnée, rechercher (S703) des imprimantes sur le réseau, trouver l'imprimante sélectionnée au moyen de la recherche d'imprimantes, et installer le second type de pilote d'imprimante correspondant à l'imprimante trouvée,
si l'imprimante sélectionnée est comprise dans le résultat de recherche, installer (S704) le second type de pilote d'imprimante correspondant à l'imprimante sélectionnée,
et pour générer une file d'attente d'imprimantes pour associer le second type de pilote d'imprimante installé à l'imprimante sélectionnée.

2. Appareil de traitement d'informations selon la revendication 1, comprenant en outre :
un moyen de réception destiné à, si une imprimante pour laquelle le premier type de pilote d'imprimante a été installé est sélectionnée en tant que l'imprimante pour laquelle le second type de pilote d'imprimante doit être installé, demander (S802) à l'utilisateur de confirmer s'il convient de supprimer le premier type de pilote d'imprimante et recevoir (S803), d'un utilisateur, une instruction ayant pour objet de savoir s'il convient de supprimer le premier type de pilote d'imprimante ; et
dans lequel, uniquement dans le cas dans lequel le moyen de réception reçoit une instruction ayant pour objet de supprimer le premier type de pilote d'imprimante, le moyen d'installation est configuré pour supprimer (S804) la file d'attente d'imprimantes associant le premier type de pilote d'imprimante à l'imprimante sélectionnée, rechercher (S805) des imprimantes sur le réseau, trouver l'imprimante sélectionnée au moyen de la recherche d'imprimantes, et installer (S805) le second type de pilote d'imprimante correspondant à l'imprimante trouvée.

3. Appareil de traitement d'informations selon la revendication 2, dans lequel, si le moyen de réception reçoit une instruction ayant pour objet de ne pas supprimer le premier type de pilote d'imprimante, le moyen d'installation est configuré pour installer (S806) le second type de pilote d'imprimante et pour définir (S807) un port de connexion d'une file d'attente d'imprimantes créée pour le second type de pilote d'imprimante pour qu'il s'agisse d'un même port qu'un port WSD d'une file d'attente d'imprimantes correspondant au premier type de pilote d'imprimante.

4. Appareil de traitement d'informations selon l'une quelconque des revendications précédentes, comprenant en outre :
un moyen de détermination destiné à déterminer (S902) si un ID d'un pilote d'imprimante de l'imprimante pour laquelle le premier type de pilote d'imprimante a été installé est un ID d'un pilote d'imprimante d'une version spécifique ; et
dans lequel le moyen d'installation est configuré, uniquement dans le cas dans lequel le moyen de détermination détermine que l'ID du pilote d'imprimante de l'imprimante pour laquelle le premier type de pilote d'imprimante a été installé est l'ID du pilote d'imprimante de la version spécifique, pour supprimer (S903) la file d'attente d'imprimantes associant le premier type de pilote d'imprimante à l'imprimante sélectionnée, rechercher (S904) des imprimantes sur le réseau, trouver l'imprimante sélectionnée au moyen de la recherche d'imprimantes, et installer (S904) le second type de pilote d'imprimante correspondant à l'imprimante trouvée.

5. Appareil de traitement d'informations selon la revendication 4, dans lequel le moyen de détermination détermine en outre si le premier type de pilote d'imprimante est un pilote d'imprimante installé automatiquement, et
dans lequel, uniquement dans le cas dans lequel le moyen de détermination détermine que le premier type de pilote d'imprimante est le pilote d'imprimante installé automatiquement, et que l'ID du premier type de pilote d'imprimante est l'ID du pilote d'imprimante de la version spécifique, le moyen d'installation est configuré pour supprimer (S1004) la file d'attente d'imprimantes associant le premier type de pilote d'imprimante à l'imprimante sélectionnée, rechercher (S1005) des imprimantes sur le réseau, trouver l'imprimante sélectionnée au moyen de la recherche d'imprimantes, et installer (S1005) le second type de pilote d'imprimante correspondant à l'imprimante trouvée.

6. Appareil de traitement d'informations selon l'une quelconque des revendications précédentes, dans lequel le moyen d'identification est configuré pour identifier l'imprimante pour laquelle le second type de pilote d'imprimante peut être installé, parmi les imprimantes pour lesquelles le premier type de pilote d'imprimante a été installé, par une communication avec les imprimantes pour lesquelles le premier type de pilote d'imprimante a été installé.

7. Procédé de commande, comprenant :
une étape d'acquisition (S501) consistant à acquérir un résultat de recherche d'imprimantes sur un réseau à partir d'un système d'exploitation, des imprimantes pour chacune desquelles un premier type de pilote d'imprimante a été installé et des imprimantes pour chacune desquelles un second type de pilote d'imprimante a été installé étant exclues du résultat de recherche, le résultat de recherche établissant une liste d'imprimantes pour lesquelles le second type de pilote d'imprimante peut être installé ;
une étape d'identification (S507) consistant à identifier une imprimante pour laquelle le second type de pilote d'imprimante peut être installé, parmi les imprimantes pour lesquelles le premier type de pilote d'imprimante a été installé ;
une étape d'affichage (S511) consistant à afficher un écran permettant de sélectionner, parmi les imprimantes comprises dans le résultat de recherche acquis et l'imprimante identifiée, une imprimante pour laquelle le second type de pilote d'imprimante doit être installé ; et
une étape d'installation consistant à installer le second type de pilote d'imprimante correspondant à une imprimante sélectionnée sur la base d'une opération d'utilisateur par le biais de l'écran,
dans lequel l'étape d'installation consiste à :
si une imprimante pour laquelle le premier type de pilote d'imprimante a été installé est sélectionnée en tant que l'imprimante pour laquelle le second type de pilote d'imprimante doit être installé, supprimer (S702) une file d'attente d'imprimantes associant le premier type de pilote d'imprimante à l'imprimante sélectionnée, rechercher (S703) des imprimantes sur le réseau, trouver l'imprimante sélectionnée au moyen de la recherche d'imprimantes, et installer (S704) le second type de pilote d'imprimante correspondant à l'imprimante trouvée,
si l'imprimante sélectionnée est comprise dans le résultat de recherche, installer (S704) le second type de pilote d'imprimante correspondant à l'imprimante sélectionnée,
et à générer une file d'attente d'imprimantes pour associer le second type de pilote d'imprimante installé à l'imprimante sélectionnée.

8. Procédé de commande selon la revendication 7, comprenant en outre :
une étape de réception consistant à recevoir (S803), d'un utilisateur, une instruction ayant pour objet de savoir s'il convient de supprimer le premier type de pilote d'imprimante, en demandant (S802) à l'utilisateur de confirmer s'il convient de supprimer le premier type de pilote d'imprimante, si une imprimante pour laquelle le premier type de pilote d'imprimante a été installé est sélectionnée en tant que l'imprimante pour laquelle le second type de pilote d'imprimante doit être installé ; et
dans lequel l'étape d'installation, uniquement dans le cas dans lequel une instruction ayant pour objet de supprimer le premier type de pilote d'imprimante est reçue à l'étape de réception, consiste à supprimer (S804) la file d'attente d'imprimantes associant le premier type de pilote d'imprimante à l'imprimante sélectionnée, rechercher (S805) des imprimantes sur le réseau, trouver l'imprimante sélectionnée au moyen de la recherche d'imprimantes, et installer (S805) le second type de pilote d'imprimante correspondant à l'imprimante trouvée.

9. Procédé de commande selon la revendication 8, dans lequel, si une instruction ayant pour objet de ne pas supprimer le premier type de pilote d'imprimante est reçue à l'étape de réception, l'étape d'installation consiste à installer (S806) le second type de pilote d'imprimante et définir (S807) un port de connexion d'une file d'attente d'imprimantes créée pour le second type de pilote d'imprimante pour qu'il s'agisse d'un même port qu'un port WSD d'une file d'attente d'imprimantes correspondant au premier type de pilote d'imprimante à l'étape d'installation.

10. Procédé de commande selon l'une quelconque des revendications 7 à 9, comprenant en outre :
une étape de détermination (S902) consistant à déterminer si un ID d'un pilote d'imprimante de l'imprimante pour laquelle le premier type de pilote d'imprimante a été installé est un ID d'un pilote d'imprimante d'une version spécifique ; et
dans lequel l'étape d'installation consiste à supprimer (S903) la file d'attente d'imprimantes associant le premier type de pilote d'imprimante à l'imprimante sélectionnée, rechercher (S904) des imprimantes sur le réseau, trouver l'imprimante sélectionnée au moyen de la recherche d'imprimantes, et installer (S904) le second type de pilote d'imprimante correspondant à l'imprimante trouvée, uniquement dans le cas dans lequel il est déterminé, à l'étape de détermination, que l'ID du pilote d'imprimante de l'imprimante pour laquelle le premier type de pilote d'imprimante a été installé est l'ID du pilote d'imprimante de la version spécifique.

11. Procédé de commande selon la revendication 10, dans lequel il est en outre déterminé, à l'étape de détermination, que le premier type de pilote d'imprimante est, ou non, un pilote d'imprimante installé automatiquement, et
dans lequel, uniquement dans le cas dans lequel il est déterminé, à l'étape de détermination, que le premier type de pilote d'imprimante est le pilote d'imprimante installé automatiquement, et que l'ID du premier type de pilote d'imprimante est l'ID du pilote d'imprimante de la version spécifique, l'étape d'installation consiste à supprimer (S1004) la file d'attente d'imprimantes associant le premier type de pilote d'imprimante à l'imprimante sélectionnée, rechercher (S1005) des imprimantes sur le réseau, trouver l'imprimante sélectionnée au moyen de la recherche d'imprimantes, et installer (S1005) le second type de pilote d'imprimante correspondant à l'imprimante trouvée.

12. Procédé de commande selon l'une quelconque des revendications 7 à 11, dans lequel l'imprimante pour laquelle le second type de pilote d'imprimante peut être installé est identifiée à l'étape d'identification, parmi les imprimantes pour lesquelles le premier type de pilote d'imprimante a été installé, par une communication avec les imprimantes pour lesquelles le premier type de pilote d'imprimante a été installé.

13. Programme comprenant des instructions qui, lorsqu'elles sont exécutées sur un dispositif, amènent le dispositif à mettre en œuvre un procédé selon l'une quelconque des revendications 7 à 12.

14. Support d'informations lisible par ordinateur contenant en mémoire un programme selon la revendication 13.
